(19) Europäisches Patentamt
European Patent Office
Office européen des brevets

(11) **EP 4 491 592 B1**

(12) **EUROPEAN PATENT SPECIFICATION**

(45) Date of publication and mention
of the grant of the patent:
**27.05.2026 Bulletin 2026/22**

(21) Application number: **22955721.0**

(22) Date of filing: **18.08.2022**

(51) International Patent Classification (IPC):
**C03B 37/022** (2006.01)

(52) Cooperative Patent Classification (CPC):
**C03C 1/002; C03B 37/022; C03C 3/089;
C03C 13/046; C03C 25/40; D06M 15/39;**
C03B 5/005; D06M 13/513; D06M 15/59

(86) International application number:
**PCT/JP2022/031232**

(87) International publication number:
**WO 2024/038547 (22.02.2024 Gazette 2024/08)**

(54) **FLAT CROSS-SECTION GLASS FIBER, AND METHOD FOR PRODUCING FLAT CROSS-SECTION GLASS FIBER FROM GLASS RAW MATERIAL INCLUDING RECYCLED GLASS MATERIAL**

GLASFASER MIT FLACHEM QUERSCHNITT UND VERFAHREN ZUR HERSTELLUNG EINER GLASFASER MIT FLACHEM QUERSCHNITT AUS GLASROHMATERIAL MIT RECYCELTEM GLASMATERIAL

FIBRE DE VERRE À SECTION TRANSVERSALE PLATE ET PROCÉDÉ DE PRODUCTION DE FIBRE DE VERRE À SECTION TRANSVERSALE PLATE À PARTIR DE MATIÈRE PREMIÈRE DE VERRE COMPRENANT UN MATÉRIAU DE VERRE RECYCLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.01.2025 Bulletin 2025/03**

(73) Proprietor: **Nitto Boseki Co., Ltd.
Fukushima-shi,
Fukushima 960-8161 (JP)**

(72) Inventors:
• **NUKUI Yosuke
Fukushima-shi, Fukushima 960-8161 (JP)**

• **HARASHIMA Shunsuke
Fukushima-shi, Fukushima 960-8161 (JP)**
• **NAGAMINE Nobuyoshi
Fukushima-shi, Fukushima 960-8161 (JP)**

(74) Representative: **Schön, Christoph
Dr. Schön, Neymeyr & Partner mbB
Bavariaring 26
80336 München (DE)**

(56) References cited:
**WO-A1-2020/040033     JP-A- 2000 103 635
JP-A- 2009 263 211     JP-A- 2010 150 127
JP-A- 2019 052 323     JP-A- 2021 001 111**

## Description

Technical Field

The present invention relates to flat-cross-section glass fiber, and a method for manufacturing flat-cross-section glass fiber from a glass raw material containing a recycled glass material.

Background Art

Glass fibers have been widely used in various applications for giving enhanced performance to resin molded products. Among glass fibers, glass fiber including a plurality of glass filaments each having a flat cross-sectional shape having a major axis with a length within a specific range and a minor axis with a length within a specific range (hereinafter, may be referred to as flat-cross-section glass fiber) has superior reinforcing ability for resin molded products such as reduction in warpage and enhancement in bending strength for glass-fiber-reinforced resin molded products, and hence the demand has been increasing in recent years (e.g., see Patent Literature 1).

It has been proposed for manufacturing flat-cross-section glass fiber including a plurality of the glass filaments each having a flat cross-sectional shape (hereinafter, may be referred to as flat-cross-section glass filaments) to set the aspect ratio of each cross-sectional shape, X/Y, wherein X denotes the major axis of the cross-section of the corresponding flat-cross-section glass filament and Y denotes the minor axis thereof (i.e., the aspect ratio is the ratio of the length of the major axis of the flat cross-section of the flat-cross-section glass filament to the length of the minor axis thereof, and calculated as (length of major axis / length of minor axis); this may be referred to as the irregular shape ratio), within the range of 1.5 to 20, preferably of 3 to 10, and set the value in percentage calculated by dividing the variation of the aspect ratios, $\sigma$, by the mean of the aspect ratios within the range of 15% or less, preferably of 10% or less (e.g., see Patent Literature 2). Patent Literature 2 states that chopped strands formed by cutting glass fiber including a plurality of the flat-cross-section glass filaments into pieces of 3 mm in length, with the aspect ratios of the cross-sectional shapes of the flat-cross-section glass filaments and the value in percentage calculated by dividing the variation of the aspect ratios, $\sigma$, by the mean of the aspect ratios set within those ranges, have characteristics suitable as a reinforcing material for composite materials necessary to provide parts for which dimensional precision is strictly required such as housings for electronic control devices, and are able to give effects to achieve reduced distortion and enhanced strength in housings after injection molding.

Citation List

Patent Literature

Patent Literature 1: Japanese Patent No. 7063424
Patent Literature 2: Japanese Patent Laid-Open No. 2021-1111

Summary of Invention

Technical Problem

On the other hand, the recent increase in environmental consciousness has promoted reusing crushed products of glass fiber waste (recycled glass material) as a glass raw material, wherein the glass fiber waste is generated through the manufacturing process and removed of extraneous matters.

In contrast to pure glass raw materials consisting of mineral, however, the recycled glass material contains fine foreign matters such as platinum and brick debris, and such foreign matters affect the productivity of flat-cross-section glass fiber, and hence the recycled glass material has a disadvantage that it is not possible just by controlling the aspect ratios (irregular shape ratios) of the cross-sectional shapes of the flat-cross-section glass filaments to achieve enhanced continuous-production efficiency and mass-production suitability for the flat-cross-section glass fiber while the reinforcing ability of the flat-cross-section glass fiber for resin molded products is maintained.

An object of the present invention is to overcome that disadvantage and provide flat-cross-section glass fiber that is superior in continuous-production efficiency and mass-production suitability and able to give superior reinforcing ability for resin molded products, and a method for manufacturing flat-cross-section glass fiber from a glass raw material containing a recycled glass material.

Solution to Problem

To achieve the object, the flat-cross-section glass fiber of the present invention includes a plurality of glass filaments each having a flat cross-sectional shape having a major axis with a length in a specific range and a minor axis with a length in a specific range, wherein the coefficient of variation for the lengths of the minor axes is within the range of 8.0 to 26.1%.

The coefficient of variation for the lengths of the minor axes is a value in percentage calculated by dividing the standard deviation of the lengths of the minor axes by the mean of the lengths of the minor axes.

According to the flat-cross-section glass fiber of the present invention, in which the coefficient of variation for the lengths of the minor axes is within the above range, superior continuous-production efficiency and superior mass-production suitability can be achieved in combination with superior reinforcing ability for resin molded products.

Here, superior continuous-production efficiency means that the frequency of breaking of the flat-cross-section glass fiber in manufacturing the flat-cross-section glass fiber for 8 hours is 2.0 times/hour or less, and superior mass-production suitability means that the flow rate of molten glass passing through each nozzle in manufacturing the flat-cross-section glass fiber is 0.20 g/min or more. Superior reinforcing ability for resin molded products means that the bending strength of a glass-fiber-reinforced polyamide resin injection-molded product containing 30% by mass of chopped strands of the flat-cross-section glass fiber in accordance with JIS K 7171: 2016 is 200 MPa or more, and the warpage of a plate of the glass-fiber-reinforced polyamide resin molded product of 80 mm in length × 60 mm in width × 1 mm in thickness is 10 mm or less.

The coefficient of variation for the minor axes in the flat-cross-section glass fiber of the present invention is preferably within the range of 12.6 to 18.5%, and as a result particularly superior continuous-production efficiency and particularly superior mass-production suitability can be achieved in combination with particularly superior reinforcing ability for resin molded products.

Here, particularly superior continuous-production efficiency means that the frequency of breaking of the flat-cross-section glass fiber in manufacturing the flat-cross-section glass fiber for 8 hours is 1.0 times/hour or less, and particularly superior mass-production suitability means that the flow rate of molten glass passing through each nozzle in manufacturing the flat-cross-section glass fiber is 0.30 g/min or more. Particularly superior reinforcing ability for resin molded products means that the bending strength of a glass-fiber-reinforced polyamide resin injection-molded product containing 30% by mass of chopped strands of the flat-cross-section glass fiber in accordance with JIS K 7171: 2016 is 250 MPa or more, and the warpage of a plate of the glass-fiber-reinforced polyamide resin molded product of 80 mm in length × 60 mm in width × 1 mm in thickness is 10 mm or less.

In the flat-cross-section glass fiber of the present invention, the length of each of the minor axes, A, is within the range of 3.5 to 10.5 $\mu$m, and the ratio of the length of each of the major axes to the length of the corresponding minor axis (irregular shape ratio, length of major axis / length of minor axis), B, is within the range of 1.5 to 9.0, and the A and B, and the coefficient of variation for the lengths of the minor axes, C, preferably satisfy the following expression (1), and more preferably satisfy the following expression (2):

$$11.7 \le C^2 / (A \times A \times B)^{1/2} \le 33.4 \cdots (1)$$

$$14.0 \le C^2 / (A \times A \times B)^{1/2} \le 26.3 \cdots (2).$$

The flat-cross-section glass fiber of the present invention, when the A and B, and the coefficient of variation for the lengths of the minor axes, C, satisfy the expression (1), can achieve particularly superior continuous-production efficiency and particularly superior mass-production suitability in combination with particularly superior reinforcing ability for resin molded products.

The flat-cross-section glass fiber of the present invention, when the A and B, and the coefficient of variation for the lengths of the minor axes, C, satisfy the expression (2), can achieve particularly superior continuous-production efficiency and particularly superior mass-production suitability in combination with particularly superior reinforcing ability for resin molded products, and furthermore the coefficient of variation for the irregular shape ratios falls below 20.0%.

The coefficient of variation for the irregular shape ratios is a value in percentage calculated by dividing the standard deviation of the irregular shape ratios by the mean of the irregular shape ratios.

The method of the present invention for manufacturing flat-cross-section glass fiber from a glass raw material containing a recycled glass material includes, with use of a glass raw material containing a recycled glass material in the range of 1.0 to 50.0% by mass to the total amount, obtaining a plurality of flat-cross-section glass filaments each having a flat cross-sectional shape having a major axis with a length in a specific range and a minor axis with a length in a specific range, wherein the coefficient of variation for the lengths of the minor axes is within the range of 8.0 to 26.1%, and bundling the plurality of flat-cross-section glass filaments together.

Examples of the recycled glass material can include a product from waste glass fiber generated because of breaking, poor quality, nonconformity to standards, etc., during the manufacturing process for glass fiber or from glass fiber recovered from glass-fiber-reinforced resin molded products, the product obtained by removing organic components attaching to the surface by incineration or the like and then crushing the resultant. Examples of glass raw materials other than the recycled glass material can include mineral materials.

Description of Embodiments

Hereinafter, embodiments of the present invention will be described in detail.

The flat-cross-section glass fiber of the present embodiment is flat-cross-section glass fiber including a plurality of flat-cross-section glass filaments each having a flat cross-sectional shape having a major axis with a length in a specific range and a minor axis with a length in a specific range, wherein the coefficient of variation for the lengths of the minor axes is within the range of 8.0 to 26.1%, and preferably within the range of 12.6 to 18.5%.

Each of the flat cross-sectional shapes is preferably an oval shape or a long-oval shape, and more preferably a long-oval shape. Here, the long-oval shape is a shape given by attaching a semicircle shape to each of two opposing edges of a rectangle, or a shape similar to it. Here, the term cross-sectional means a cross-section perpendicular to the length direction of a glass filament.

In the flat-cross-section glass fiber of the present embodiment, the number of the glass filaments constituting the flat-cross-section glass fiber is, for example, 10 to 30000, preferably 20 to 20000, more preferably 50 to 10000, and still more preferably 1000 to 8000. In the flat-cross-section glass fiber of the present embodiment, the flat-cross-section glass filaments account for more than 50% of the glass filaments constituting the flat-cross-section glass fiber, preferably 80% or more thereof, more preferably 90% or more thereof, and still more preferably 100% thereof.

The coefficient of variation for the minor axes can be determined as follows. In the case where the flat-cross-section glass fiber is not contained in a glass-fiber-reinforced resin molded product, for example, the flat-cross-section glass fiber is embedded in a resin such as an epoxy resin and the resin is cured, the cured resin is cut and the cross-section is polished, and the cross-section of the cured resin is then observed with an electron microscope. For each of all or 200 or more of the flat-cross-section glass filaments constituting the flat-cross-section glass fiber and exposed in the cross-section of the cured resin, the side orthogonally intersecting with the longest side passing through substantially the center of the flat-cross-section glass filament (this longest side is defined as the major axis) at substantially the center of the flat-cross-section glass filament is defined as the minor axis, and the length is measured. Subsequently, a mean and a standard deviation are calculated from the measured lengths of the minor axes, the calculated standard deviation is divided by the calculated mean to give a value in percentage, which can be determined as the coefficient of variation for the minor axes.

In the case where the flat-cross-section glass fiber is contained in a glass-fiber-reinforced resin molded product, a cross-section of the glass-fiber-reinforced resin molded product is polished, and the cross-section of the cured resin is then observed with an electron microscope. For each of 200 or more of the flat-cross-section glass filaments constituting the flat-cross-section glass fiber and exposed in the cross-section of the cured resin, the side orthogonally intersecting with the longest side passing through substantially the center of the flat-cross-section glass filament at substantially the center of the flat-cross-section glass filament is defined as the minor axis, and the length is measured. Subsequently, a mean and a standard deviation are calculated from the measured lengths of the minor axes, the calculated standard deviation is divided by the calculated mean to give a value in percentage, which can be determined as the coefficient of variation for the minor axes.

Here, both in the case where the flat-cross-section glass fiber is not contained in a glass-fiber-reinforced resin molded product and in the case where the flat-cross-section glass fiber is contained in a glass-fiber-reinforced resin molded product, the coefficient of variation for the minor axes can be measured even through image processing with an automated analyzer for an image acquired with an electron microscope.

According to the flat-cross-section glass fiber of the present embodiment, in which the coefficient of variation for the lengths of the minor axes of the flat-cross-section glass filaments constituting the flat-cross-section glass fiber is within the range of 8.0 to 26.1%, superior continuous-production efficiency and superior mass-production suitability can be achieved in combination with superior reinforcing ability for resin molded products. In the case where the coefficient of variation for the lengths of the minor axes is within the range of 12.6 to 18.5%, particularly superior continuous-production efficiency and particularly superior mass-production suitability can be achieved in combination with superior reinforcing ability for resin molded products.

In the flat-cross-section glass fiber of the present embodiment, the coefficient of variation for the lengths of the minor axes of the flat-cross-section glass filaments constituting the flat-cross-section glass fiber is more preferably within the range of 15.1 to 18.5%, and still more preferably within the range of 15.5 to 18.5%.

In the flat-cross-section glass fiber of the present embodiment, the length of the minor axis of each of the flat-cross-section glass filaments constituting the flat-cross-section glass fiber, A, is within the range of 3.5 to 10.5 $\mu$m, and the

ratio of the length of the major axis to the length of the corresponding minor axis (length of major axis / length of minor axis), B, is within the range of 1.5 to 9.0. For the length of the major axis, the length of the longest side passing through substantially the center of the flat-cross-section glass filament is measured as the length of a major axis in the aforementioned measurement of the length of the minor axis, a mean is calculated from the lengths of measured major axes, and the mean is determined as the length of the major axis.

In the flat-cross-section glass fiber of the present embodiment, the length of the minor axis of each of the flat-cross-section glass filaments constituting the flat-cross-section glass fiber, A, is preferably within the range of 4.0 to 9.0 $\mu$m, more preferably within the range of 4.1 to 8.4 $\mu$m, still more preferably within the range of 4.6 to 8.0 $\mu$m, especially preferably within the range of 5.1 to 7.6 $\mu$m, particularly preferably within the range of 5.3 to 7.3 $\mu$m, still particularly preferably within the range of 5.5 to 7.0 $\mu$m, and most preferably within the range of 5.5 to 6.5 $\mu$m.

In the flat-cross-section glass fiber of the present embodiment, the length of the major axis of each of the flat-cross-section glass filaments constituting the flat-cross-section glass fiber is, for example, within the range of 5.3 to 94.5 $\mu$m, preferably within the range of 7.0 to 84.0 $\mu$m, more preferably within the range of 9.0 to 60.0 $\mu$m, still more preferably within the range of 11.0 to 55.0 $\mu$m, especially preferably within the range of 12.0 to 50.0 $\mu$m, particularly preferably within the range of 15.0 to 45.0 $\mu$m, still particularly preferably within the range of 18.0 to 36.0 $\mu$m, and most preferably within the range of 20.0 to 33.0 $\mu$m.

In the flat-cross-section glass fiber of the present embodiment, the ratio of the length of the major axis of each of the flat-cross-section glass filaments constituting the flat-cross-section glass fiber to the length of the miner axis thereof (length of major axis / length of minor axis), B, is preferably within the range of 2.0 to 8.0, more preferably within the range of 2.5 to 7.0, still more preferably within the range of 3.5 to 6.5, and particularly preferably within the range of 4.0 to 6.0.

In the flat-cross-section glass fiber of the present embodiment, the A and B, and the coefficient of variation for the lengths of the minor axes, C, satisfy the following expression (a), preferably satisfy the following expression (1), and more preferably satisfy the following expression (2):

$$5.5 \leq C^2 / (A \times A \times B)^{1/2} \leq 53.6 \cdots (a)$$

$$11.7 \leq C^2 / (A \times A \times B)^{1/2} \leq 33.4 \cdots (1)$$

$$14.0 \leq C^2 / (A \times A \times B)^{1/2} \leq 26.3 \cdots (2).$$

The flat-cross-section glass fiber of the present embodiment, when the A and B, and the coefficient of variation for the lengths of the minor axes, C, satisfy the expression (a), can achieve superior continuous-production efficiency and superior mass-production suitability in combination with superior reinforcing ability for resin molded products. The flat-cross-section glass fiber of the present embodiment, when the A and B, and the coefficient of variation for the lengths of the minor axes, C, satisfy the expression (1), can achieve particularly superior continuous-production efficiency and particularly superior mass-production suitability in combination with particularly superior reinforcing ability for resin molded products. Moreover, the flat-cross-section glass filament of the present embodiment, when the A and B, and the coefficient of variation for the lengths of the minor axes, C, satisfy the expression (2), can achieve particularly superior continuous-production efficiency and particularly superior mass-production suitability in combination with particularly superior reinforcing ability for resin molded products, and furthermore the coefficient of variation for the irregular shape ratios falls below 20.0%.

In the expressions (a), (1), and (2), "$(A \times A \times B)^{1/2}$" represents the geometric mean of the length of a minor axis (= A) and the length of a major axis (= A $\times$ B), and reflects the size of the cross-section of a flat-cross-section glass filament. Larger "$(A \times A \times B)^{1/2}$" tends to give higher continuous-production efficiency and mass-production suitability, and tends to give lower reinforcing ability for resin molded products, especially a lower effect to reduce the warpage of glass-fiber-reinforced resin molded products. In the expressions (a), (1), and (2), higher values of "B" tend to give lower continuous-production efficiency and mass-production suitability, and tend to give higher reinforcing ability for resin molded products, especially a higher effect to reduce the warpage of glass-fiber-reinforced resin molded products. In the expressions (a), (1), and (2), smaller "C" tends to give higher continuous-production efficiency and lower mass-production suitability. The expressions (a), (1), and (2) are inferred to represent the balance of those tendencies.

In the flat-cross-section glass fiber of the present embodiment, the coefficient of variation for the irregular shape ratios of the flat-cross-section glass filaments constituting the flat-cross-section glass fiber is, for example, 25.0% or less, preferably 21.4% or less, more preferably less than 20.0%, still more preferably within the range of 15.1 to 19.9%, and particularly preferably within the range of 15.5% to 19.4%. For the coefficient of variation for the irregular shape ratios, in the aforementioned measurement of the lengths of minor axes, the length of a minor axis and the length of the corresponding major axis are measured to calculate the irregular shape ratio of the single flat-cross-section glass filament from them. Subsequently, a mean and a standard deviation are calculated from the irregular shape ratios calculated for flat-cross-section glass filaments each of which has been subjected to measurement of the length of the minor axis and the length of the major axis, the calculated standard deviation is divided by the calculated mean to give a value in percentage, which can be determined as the coefficient of variation for the irregular shape ratios.

In the flat-cross-section glass fiber of the present embodiment, the coefficient of variation for the cross-sectional areas of the flat-cross-section glass filaments constituting the flat-cross-section glass fiber is, for example, 25.0% or less, preferably 22.5% or less, more preferably within the range of 14.1 to 21.0%, and still more preferably within the range of 14.5 to 20.0%. For the coefficient of variation for the cross-sectional areas, in the aforementioned measurement of the lengths of minor axes, the cross-sectional areas of the flat-cross-section glass filaments are measured, for example, with known image analysis software such as "A-Zo Kun" ((R), manufactured by Asahi Kasei Engineering Corporation). Subsequently, a mean and a standard deviation are calculated from the measured cross-sectional areas, the calculated standard deviation is divided by the calculated mean to give a value in percentage, which can be determined as the coefficient of variation for the cross-sectional areas.

The flat-cross-section glass fiber of the present embodiment can be manufactured with a manufacturing method including, with use of a glass raw material containing a recycled glass material in the range of 1.0 to 50.0% by mass to the total amount, obtaining a plurality of flat-cross-section glass filaments each having a flat cross-sectional shape having a major axis with a length in a specific range and a minor axis with a length in a specific range, wherein the coefficient of variation for the lengths of the minor axes is within the range of 8.0 to 26.1%, and bundling the plurality of flat-cross-section glass filaments together.

Examples of the recycled glass material can include a product from waste glass fiber generated because of breaking, poor quality, nonconformity to standards, etc., during the manufacturing process for glass fiber or from glass fiber recovered from glass-fiber-reinforced resin molded products, the product obtained by removing organic components attaching to the surface by incineration or the like and then crushing the resultant.

Examples of glass raw materials other than the recycled glass material can include a mineral material such as quartz sand, feldspar, clay, and limestone, or a mineral-derived purified material such as silica powder, dolomite, talc, clay, alumina, and soda ash.

The flat-cross-section glass fiber of the present embodiment can be manufactured, for example, with the following method. First, a glass raw material (glass batch) prepared to contain a recycled glass material in the range of 1.0 to 50.0% by mass to the total amount and have a specific glass composition is supplied to a melting furnace and is melted, for example, at a temperature in the range of 1450 to 1550°C, and the melted glass batch (molten glass) is drawn from 10 to 30000 nozzle tips of a bushing controlled at a predetermined temperature and rapidly cooled to give a plurality of flat-cross-section glass filaments, wherein each of the nozzle tips is provided with a non-circular shape such as a shape corresponding to the individual cross-sectional shape of the flat-cross-section glass filaments and with a protrusion or a notch for rapidly cooling the molten glass and controlling the temperature condition. Then, a sizing agent or binder is applied onto the resulting plurality of flat-cross-section glass filaments with an applicator as a coating machine, and 10 to 30000 flat-cross-section glass filaments are bundled together with a sizing shoe and simultaneously wound around a tube by a winder at high speed; thus, the flat-cross-section glass fiber of the present embodiment can be manufactured. The minor axis and major axis of each flat-cross-section glass filament constituting the flat-cross-section glass fiber of the present embodiment can be adjusted, for example, through adjusting the major axis and minor axis of each nozzle tip, the winding speed, and the temperature condition. For example, the minor axis and major axis can be decreased by increasing the winding speed, and the minor axis and major axis can be increased by decreasing the winding speed.

In the flat-cross-section glass fiber of the present embodiment, the glass composition of the glass forming the flat-cross-section glass fiber and the flat-cross-section glass filaments constituting the flat-cross-section glass fiber is not limited, and can be, for example, an E glass composition, which is the most versatile glass composition. The E glass composition is a composition containing $SiO_2$ in the range of 52.0 to 56.0% by mass, $Al_2O_3$ in the range of 12.0 to 16.0% by mass, MgO and CaO in the range of 20.0 to 25.0% by mass in total, and $B_2O_3$ in the range of 5.0 to 10.0% by mass, with respect to the total amount of glass filaments.

The glass raw material for use in manufacturing the flat-cross-section glass fiber of the present embodiment is a product such that a recycled glass material in the range of 1.0 to 50.0% by mass to the total amount and the mineral material or mineral-derived purified material are homogenized, for example, through mixing or melting. The content ratio between the recycled glass material and the mineral material or mineral-derived purified material in the glass raw material is determined to give a desired composition such as an E glass composition in view of components contained in the recycled glass material and the mineral material or mineral-derived purified material and the content fractions thereof, and the amounts of the components that volatilize in the melting process. For example, the recycled glass material is preferably one recovered from a glass-fiber-reinforced resin molded product containing E glass fiber.

Examples of the form of the flat-cross-section glass fiber of the present embodiment include glass yarns, glass chopped strands, glass rovings, glass powders, and glass filament mats. The glass fiber may be in a state of a glass cloth composed of glass yarns or a chopped strand mat composed of glass chopped strands, or in a state in which glass filaments are dispersed in a glass-fiber-reinforced resin molded product.

In the case where the flat-cross-section glass fiber of the present embodiment is chopped strands, the number of glass filaments constituting the flat-cross-section glass fiber is, for example, 10 to 20000, preferably 50 to 10000, and more preferably 1000 to 8000. The length of each of the chopped strands as the flat-cross-section glass fiber of the present embodiment is, for example, 1.0 to 100.0 mm, preferably 1.2 to 51.0 mm, more preferably 1.5 to 30.0 mm, still more preferably 2.0 to 15.0 mm, and particularly preferably 2.3 to 7.8 mm. Here, the chopped strands can be obtained by cutting the flat-cross-section glass fiber manufactured with the method described above by means of a known method such as a rotary drum cutter to give the specific length.

In the case where the flat-cross-section glass fiber of the present embodiment is a roving, the number of glass filaments constituting the flat-cross-section glass fiber is, for example, 200 to 30000. The mass per unit area of the roving as the flat-cross-section glass fiber of the present embodiment is 35 to 10000 tex (g/km).

In the case where the flat-cross-section glass fiber of the present embodiment is glass powder (may be referred to as cut fiber), the number of glass filaments constituting the flat-cross-section glass fiber is, for example, 10 to 20000. The length of the glass powder as the flat-cross-section glass fiber of the present embodiment is, for example, 0.001 to 0.900 mm. Here, the glass powder can be obtained by pulverizing the flat-cross-section glass fiber manufactured with the method described above to give the specific length by means of a known method such as a ball mill or Henschel mixer.

In the flat-cross-section glass fiber of the present embodiment, the flat-cross-section glass filaments constituting the flat-cross-section glass fiber may be in contact with or separated from each other. When the flat-cross-section glass filaments are separated from each other, a surface treatment agent or a resin composition constituting a glass-fiber-reinforced resin molded product may be present in interspaces of the flat-cross-section glass filaments.

Examples of the surface treatment agent include a composition containing a lubricant, a surfactant, or the like in addition to a resin such as urethane resin, epoxy resin, vinyl acetate resin, acrylic resin, modified polypropylene, particularly carboxylic acid-modified polypropylene, and a copolymer of (poly)carboxylic acid, particularly maleic acid, and an unsaturated monomer, or a silane coupling agent.

Examples of the silane coupling agent here can include aminosilanes, chlorosilanes, epoxysilanes, mercaptosilanes, vinylsilanes, acrylsilanes, and cationic silanes. As the silane coupling agent, these can be used singly or in combination of two or more.

Examples of the aminosilane include γ-aminopropyltriethoxysilane, N-β-(aminoethyl)-y-aminopropyltrimethoxysilane, N-β-(aminoethyl)-N'-β-(aminoethyl)-γ-aminopropyltrimethoxysilane, and γ-anilinopropyltrimethoxysilane.

Examples of the chlorosilane include γ-chloropropyltrimethoxysilane.

Examples of the epoxysilane include γ-glycidoxypropyltrimethoxysilane and β-(3,4-epoxy cyclohexyl)ethyltrimethoxysilane.

Examples of the mercaptosilane can include γ-mercaptotrimethoxysilane.

Examples of the vinylsilane include vinyl trimethoxysilane and N-β-(N-vinylbenzylaminoethyl)-γ-aminopropyltrimethoxysilane.

Examples of the acrylsilane include γ-methacryloxypropyltrimethoxysilane.

Examples of the cationic silane include N-(vinylbenzyl)-2-aminoethyl-3-aminopropyltrimethoxysilane hydrochloride and N-phenyl-3-aminopropyltrimethoxysilane hydrochloride.

Examples of the lubricant can include modified silicone oils, animal oils and hydrogenated products thereof, vegetable oils and hydrogenated products thereof, animal waxes, vegetable waxes, mineral waxes, condensates of a higher saturated fatty acid and a higher saturated alcohol, polyethyleneimine, polyalkylpolyamine alkylamide derivatives, fatty acid amides, and quaternary ammonium salts. As the lubricant, these can be used singly or in combinations of two or more.

Examples of the animal oil include beef tallow.

Examples of the vegetable oil include soybean oil, coconut oil, rapeseed oil, palm oil, and castor oil.

Examples of the animal wax include beeswax and lanolin.

Examples of the vegetable wax include candelilla wax and carnauba wax.

Examples of the mineral wax include paraffin wax and montan wax.

Examples of the condensate of a higher saturated fatty acid and a higher saturated alcohol include stearates such as lauryl stearate.

Examples of the fatty acid amide include dehydrated condensates of a polyethylenepolyamine such as diethylenetriamine, triethylenetetramine, or tetraethylenepentamine and a fatty acid such as lauric acid, myristic acid, palmitic acid, or stearic acid.

Examples of the quaternary ammonium salt include alkyltrimethylammonium salts such as lauryltrimethylammonium chloride.

Examples of the surfactant can include nonionic surfactants, cationic surfactants, anionic surfactants, and amphoteric surfactants. As the surfactant, these can be used singly or in combination of two or more.

Examples of the nonionic surfactant can include ethylene oxide propylene oxide alkyl ether, polyoxyethylene alkyl ether, polyoxyethylene-polyoxypropylene-block copolymer, alkyl polyoxyethylene-polyoxypropylene block copolymer ether, polyoxyethylene fatty acid ester, polyoxyethylene fatty acid monoester, polyoxyethylene fatty acid diester, polyoxyethylene sorbitan fatty acid ester, glycerol fatty acid ester ethylene oxide adduct, polyoxyethylene castor oil ether, hydrogenated castor oil ethylene oxide adduct, alkylamine ethylene oxide adduct, fatty acid amide ethylene oxide adduct, glycerol fatty acid ester, polyglycerol fatty acid ester, pentaerythritol fatty acid ester, sorbitol fatty acid ester, sorbitan fatty acid ester, sucrose fatty acid ester, polyhydric alcohol alkyl ether, fatty acid alkanolamide, acetylene glycol, acetylene alcohol, ethylene oxide adduct of acetylene glycol, and ethylene oxide adduct of acetylene alcohol.

Examples of the cationic surfactant can include alkyldimethylbenzylammonium chloride, alkyltrimethylammonium chloride, alkyl dimethyl ethyl ammonium ethyl sulfate, higher alkylamine acetate, higher alkylamine hydrochloride, adduct of ethylene oxide to a higher alkylamine, condensate of a higher fatty acid and polyalkylene polyamine, a salt of an ester of a higher fatty acid and alkanolamine, a salt of higher fatty acid amide, imidazoline cationic surfactant, and alkyl pyridinium salt.

Examples of the anionic surfactant can include higher alcohol sulfate salts, higher alkyl ether sulfate salts, $\alpha$-olefin sulfate salts, alkylbenzene sulfonate salts, $\alpha$-olefin sulfonate salts, reaction products of fatty acid halide and N-methyl taurine, dialkyl sulfosuccinate salts, higher alcohol phosphate ester salts, and phosphate ester salts of higher alcohol ethylene oxide adduct.

Examples of the amphoteric surfactant can include amino acid amphoteric surfactants such as alkali metal salts of alkylaminopropionic acid, betaine amphoteric surfactants such as alkyldimethylbetaine, and imidazoline amphoteric surfactants.

Examples of the resin composition constituting the glass-fiber-reinforced resin molded product can include a resin composition containing thermoplastic resin or thermosetting resin.

Examples of the thermoplastic resin can include polyethylene, polypropylene, polystyrene, styrene/maleic anhydride resins, styrene/maleimide resins, polyacrylonitrile, acrylonitrile/styrene (AS) resins, acrylonitrile/butadiene/styrene (ABS) resins, chlorinated polyethylene/acrylonitrile/styrene (ACS) resins, acrylonitrile/ethylene/styrene (AES) resins, acrylonitrile/styrene/methyl acrylate (ASA) resins, styrene/acrylonitrile (SAN) resins, methacrylic resins, polyvinyl chloride (PVC), polyvinylidene chloride (PVDC), polyamide, polyacetal, polyethylene terephthalate (PET), polybutylene terephthalate (PBT), polytrimethylene terephthalate (PTT), polycarbonate, polyarylene sulfide, polyethersulfone (PES), polyphenylsulfone (PPSU), polyphenylene ether (PPE), modified polyphenylene ether (m-PPE), polyaryl etherketone, liquid crystal polymer (LCP), fluororesins, polyetherimide (PEI), polyarylate (PAR), polysulfone (PSF), polyamideimide (PAI), polyaminobismaleimide (PABM), thermoplastic polyimide (TPI), polyethylene naphthalate (PEN), ethylene/vinyl acetate (EVA) resins, ionomer (IO) resins, polybutadiene, styrene/butadiene resins, polybutylene, polymethylpentene, olefin/vinyl alcohol resins, cyclic olefin resins, cellulose resins, and polylactic acid.

Examples of the polyethylene can include high density polyethylene (HDPE), medium density polyethylene, low density polyethylene (LDPE), linear low density polyethylene (LLDPE), and ultra high molecular weight polyethylene.

Examples of the polypropylene can include isotactic polypropylene, atactic polypropylene, syndiotactic polypropylene, and mixtures thereof.

Examples of the polystyrene can include general-purpose polystyrene (GPPS), which is an atactic polystyrene having an atactic structure, high impact polystyrene (HIPS) with a rubber component added to GPPS, and syndiotactic polystyrene with syndiotactic structure.

Examples of the methacrylic resin can include polymers obtained by homopolymerizing one of acrylic acid, methacrylic acid, styrene, methyl acrylate, ethyl acrylate, ethyl methacrylate, butyl acrylate, butyl methacrylate, and fatty acid vinyl ester, or polymers obtained by copolymerizing two or more of these.

Examples of the polyvinyl chloride can include a vinyl chloride homopolymer, a copolymer of a vinyl chloride monomer and a copolymerizable monomer, or a graft copolymer obtained by graft polymerization of a vinyl chloride monomer to polymer polymerized by a conventionally known method such as emulsion polymerization method, suspension polymerization method, micro suspension polymerization method, or bulk polymerization method.

Examples of the polyamide can include one of components such as polycaproamide (polyamide 6), polyhexamethylene adipamide (polyamide 66), polytetramethylene adipamide (polyamide 46), polytetramethylene sebacamide (polyamide 410), polypentamethylene adipamide (polyamide 56), polypentamethylene sebacamide (polyamide 510), polyhexamethylene sebacamide (polyamide 610), polyhexamethylene dodecamide (polyamide 612), polydecamethylene adipamide (polyamide 106), polydecamethylene sebacamide (polyamide 1010), polydecamethylene dodecamide (polyamide 1012), polyundecanamide (polyamide 11), polyundecamethylene adipamide (polyamide 116), polydodecanamide (polyamide 12), polyxylene adipamide (polyamide XD6), polyxylene sebacamide (polyamide XD10), polymetaxylylene adipamide (polyamide MXD6), polyparaxylylene adipamide (polyamide PXD6), polytetramethylene terephthalamide (polyamide 4T), polypentamethylene terephthalamide (polyamide 5T), polyhexamethylene terephthalamide (polyamide 6T), polyhexamethylene isophthalamide (polyamide 6I), polynonamethylene terephthalamide (polyamide 9T), polydecamethylene terephthalamide (polyamide 10T), polyundecamethylene terephthalamide (polyamide 11T), polydodecamethylene terephthalamide (polyamide 12T), polytetramethylene isophthalamide (polyamide 4I), polybis(3-methyl-4-aminohexyl) methane terephthalamide (polyamide PACMT), polybis(3-methyl-4-aminohexyl) methane isophthalamide (polyamide PACMI), polybis(3-methyl-4-aminohexyl) methane dodecamide (polyamide PACM12), poly-bis(3-methyl-4-aminohexyl)methanetetradecamide (polyamide PACM14), or a copolymer obtained by a combination of a plurality of components of two or more thereof, or a mixture thereof.

Examples of the polyacetal can include a homopolymer with oxymethylene units as the main repeating unit, and a copolymer mainly consisting of oxymethylene units and containing oxyalkylene units having 2 to 8 adjacent carbon atoms in the main chain.

Examples of the polyethylene terephthalate can include a polymer obtained by polycondensation of terephthalic acid or a derivative thereof with ethylene glycol.

Examples of the polybutylene terephthalate can include a polymer obtained by polycondensation of terephthalic acid or a derivative thereof with 1,4-butanediol.

Examples of the polytrimethylene terephthalate can include polymers obtained by polycondensation of terephthalic acid or a derivative thereof with 1,3-propanediol.

Examples of the polycarbonate can include polymers obtained by a transesterification method in which a dihydroxydiaryl compound is reacted with a carbonate such as diphenyl carbonate in a molten state; or polymers obtained by phosgene method in which a dihydroxyaryl compound is reacted with phosgene.

Examples of the polyarylene sulfide can include linear polyphenylene sulfide, cross linked polyphenylene sulfide having a high molecular weight obtained by performing a curing reaction after polymerization, polyphenylene sulfide sulfone, polyphenylene sulfide ether, and polyphenylene sulfide ketone.

Examples of the modified polyphenylene ether can include: a polymer alloy of poly(2,6-dimethyl-1,4-phenylene) ether and polystyrene; a polymer alloy of poly(2,6-dimethyl-1,4-phenylene)ether and a styrene/butadiene copolymer; a polymer alloy of poly(2,6-dimethyl-1,4-phenylene)ether and a styrene/maleic anhydride copolymer; a polymer alloy of poly(2,6-dimethyl-1,4-phenylene)ether and polyamide; and a polymer alloy of poly(2,6-dimethyl-1,4-phenylene)ether and styrene/butadiene/acrylonitrile copolymer.

Examples of the polyaryl etherketone can include polyetherketone (PEK), polyetheretherketone (PEEK), polyetherketoneketone (PEKK), and polyetheretherketoneketone (PEEKK).

Examples of the liquid crystal polymer (LCP) include a polymer (copolymer) composed of one or more structural units selected from aromatic hydroxycarbonyl units which are thermotropic liquid crystal polyesters, aromatic dihydroxy units, aromatic dicarbonyl units, aliphatic dihydroxy units, aliphatic dicarbonyl units, and the like.

Examples of the fluororesin can include polytetrafluoroethylene (PTFE), perfluoroalkoxy resins (PFA), fluorinated ethylene propylene resins (FEP), fluorinated ethylene tetrafluoroethylene resins (ETFE), polyvinyl fluoride (PVF), polyvinylidene fluoride (PVDF), polychlorotrifluoroethylene (PCTFE), and ethylene/chlorotrifluoroethylene resin (ECTFE).

Examples of the ionomer (IO) resin can include copolymers of an olefin or a styrene and an unsaturated carboxylic acid, wherein a part of carboxyl groups is neutralized with a metal ion.

Examples of the olefin/vinyl alcohol resin can include ethylene/vinyl alcohol copolymers, propylene/vinyl alcohol copolymers, saponified products of ethylene/vinyl acetate copolymers, and saponified products of propylene/vinyl acetate copolymers.

Examples of the cyclic olefin resin can include monocyclic compounds such as cyclohexene, polycyclic compounds such as tetracyclopentadiene, and polymers of cyclic olefin monomers.

Examples of the polylactic acid can include poly-L-lactic acid which is a homopolymer of L-form, poly-D-lactic acid which is a homopolymer of D-form, or a stereocomplex polylactic acid which is a mixture thereof.

Examples of the cellulose resin can include methylcellulose, ethyl cellulose, hydroxycellulose, hydroxymethylcellulose, hydroxyethyl cellulose, hydroxyethyl methylcellulose, hydroxypropylmethylcellulose, cellulose acetate, cellulose propionate, and cellulose butyrate. Examples of the thermosetting resin can include unsaturated polyester resins, vinyl ester resins, epoxy (EP) resins, melamine (MF) resins, phenol resins (PF), urethane resins (PU), polyisocyanate, polyisocyanurate, polyimide (PI), urea (UF) resins, silicone (SI) resins, furan (FR) resins, benzoguanamine (BR) resins, alkyd resins, xylene resins, bismaleimide triazine (BT) resins, and diallyl phthalate resin (PDAP).

Examples

[Examples 1 to 12 and Comparative Examples 1 to 7]

A glass raw material containing a recycled glass material in an amount of 5.0% by mass to the total amount was melted, and the resulting molten glass was drawn from a bushing including 200 nozzle tips to give a plurality of flat-cross-section glass filaments, and the flat-cross-section glass filaments were bundled together; in this way, flat-cross-section glass fiber was manufactured. The nozzle tips each included a hole having a flat cross-sectional shape having a major axis with a length in a specific range and a minor axis with a length in a specific range, and a wall including a notch to cool molten glass.

At that time, flat-cross-section glass fibers of Examples 1 to 12 and Comparative Examples 1 to 7 were obtained with the length of the minor axis in the hole of the nozzle being adjusted in the range of 0.2 to 2.0 mm, the ratio of the length of the major axis to the length of the minor axis in the hole of the nozzle being adjusted in the range of 2.0 to 8.0, and the flow rate of the molten glass passing through each of the nozzles being adjusted in the range of 0.1 to 3.0 g/min.

Tables 1 to 3 show minor axes, A, major axis / minor axis, B, coefficients of variation for minor axes, C, coefficients of variation for irregular shape ratios (length of major axis / length of minor axis), coefficients of variation for cross-sectional areas, and values of $C^2/(A \times A \times B)^{1/2}$ for flat-cross-section glass filaments constituting the flat-cross-section glass fibers, and the continuous-production efficiency and mass-production suitability of the flat-cross-section glass fibers.

In addition, the flat-cross-section glass fibers were processed into chopped strands, and glass fiber resin molded products were produced with the chopped strands; Tables 1 to 3 show the warpages and bending strengths of the glass fiber resin molded products.

The continuous-production efficiency and mass-production suitability of each of the flat-cross-section glass fibers and the warpage and bending strength of each of the glass fiber resin molded products were evaluated as follows.

[Continuous-production efficiency]

In producing the flat-cross-section glass fibers of Examples 1 to 12 and Comparative Examples 1 to 7 for 8 hours, cases with the frequency of breaking of flat-cross-section glass filaments constituting flat-cross-section glass fiber being 1.0 times/hour or less were rated as "A", cases with the frequency of breaking being more than 1.0 times/hour and 2.0 times/hour or less as "B", and cases with the frequency of breaking being more than 2.0 times/hour as "C".

[Mass-production suitability]

In producing the flat-cross-section glass fibers of Examples 1 to 12 and Comparative Examples 1 to 7, cases with the flow rate of the molten glass passing through each of the nozzle tips being 0.30 g/min or more were rated as "A", cases with the flow rate being 0.20 g/min or more and less than 0.30 g/min as "B", and cases with the flow rate being less than 0.20 g/min as "C".

[Warpage of glass-fiber-reinforced resin molded product]

The surface of each of the flat-cross-section glass fibers of Examples 1 to 12 and Comparative Examples 1 to 7 was coated with a composition containing a silane coupling agent, and the resultant was cut into pieces of 3 mm in length, giving chopped strands. Then, the chopped strands and polyamide 6 resin (manufactured by Ube Industries, Ltd., product name: UBE1015B) were kneaded with a twin-screw kneader (manufactured by SHIBAURA MACHINE CO., LTD., product name: TEM-26SS) at a screw rotational frequency of 100 rpm and a temperature of 270°C to produce resin pellets having a glass fiber content of 30% by mass.

Then, the resin pellets were injection-molded with an injection molding machine (manufactured by Nissei Plastic Industrial Co. Ltd., product name: NEX80) at a mold temperature of 80°C and an injection temperature of 270°C to form test pieces for warpage measurement each in the form of a plate having dimensions of 80 mm in length $\times$ 60 mm in width $\times$ 1 mm in thickness. A corner of a test piece for warpage measurement was placed on a flat plane, and a gap generated between the corner at the diagonal position to the corner placed on the flat plane and the flat plane was measured with a caliper. Such a gap was measured for each of the four corners of the test piece for warpage measurement as placed on the flat plane, and cases with a warpage of 10 mm or less were rated as "A", and cases with a warpage of 10 mm or more as "B".

[Bending strength of glass fiber resin molded product]

The same resin pellets as used in molding for the test pieces for warpage measurement were injection-molded with an injection molding machine (manufactured by Nissei Plastic Industrial Co. Ltd., product name: NEX80) at a mold temperature of 90°C and an injection temperature of 270°C to form type-A dumbbell test pieces (thickness: 4 mm) in accordance with JIS K 7165: 2008. Each of the type-A dumbbell test pieces was subjected to static tensile test in accordance with JIS K 7171: 2016 with a universal testing machine (manufactured by Shimadzu Corporation, product name: AUTOGRAPH AG-5000B) under a test temperature of 23°C, and the resulting measurement was determined as the bending strength. Cases with a bending strength of 250 MPa or more were rated as "A", cases with a bending strength of 200 MPa or more and less than 250 MPa as "B", and cases with a bending strength of less than 200 MPa as "C".

[Table 1]

| | Example 1 | Example 2 | Example 3 | Example 4 | Example 5 |
|---|---|---|---|---|---|
| Minor axis (μm) A | 6.0 | 5.0 | 6.0 | 6.3 | 6.0 |
| Major axis / minor axis B | 4.0 | 4.0 | 4.5 | 4.5 | 4.0 |
| Coefficient of variation for minor axes (%) C | 13.3 | 16.0 | 12.7 | 18.3 | 18.0 |
| Coefficient of variation for irregular shape ratios (%) | 17.5 | 19.3 | 17.8 | 17.8 | 20.0 |
| Coefficient of variation for cross-sectional areas (%) | 16.0 | 15.0 | 18.0 | 17.5 | 19.5 |
| $C^2/(A \times A \times B)^{1/2}$ | 14.7 | 25.6 | 12.7 | 25.1 | 27.0 |
| Continuous-production efficiency | A | A | A | A | A |
| Mass-production suitability | A | A | A | A | A |
| Warpage of glass-fiber-reinforced resin molded product | A | A | A | A | A |
| Bending strength of glass-fiber-reinforced resin molded product | A | A | A | A | A |

[Table 2]

| | Example 6 | Example 7 | Example 8 | Example 9 | Example 10 | Example 11 | Example 12 |
|---|---|---|---|---|---|---|---|
| Minor axis (μm) A | 7.0 | 5.5 | 5.0 | 7.0 | 6.3 | 5.0 | 6.0 |
| Major axis / minor axis B | 4.0 | 6.0 | 2.0 | 4.0 | 4.5 | 4.0 | 4.0 |
| Coefficient of variation for minor axes (%) C | 9.0 | 12.4 | 18.8 | 23.6 | 23.8 | 22.0 | 25.0 |
| Coefficient of variation for irregular shape ratios (%) | 12.5 | 18.3 | 20.0 | 15.0 | 17.8 | 17.5 | 22.5 |
| Coefficient of variation for cross-sectional areas (%) | 15.0 | 22.0 | 14.5 | 16.0 | 17.8 | 15.5 | 16.5 |
| $C^2/(A \times A \times B)^{1/2}$ | 5.8 | 11.4 | 50.0 | 39.8 | 42.4 | 48.4 | 52.1 |
| Continuous-production efficiency | A | B | A | A | B | B | B |
| Mass-production suitability | A | B | A | A | A | A | A |
| Warpage of glass-fiber-reinforced resin molded product | A | A | B | A | A | A | A |
| Bending strength of glass-fiber-reinforced resin molded product | B | A | A | B | A | A | A |

[Table 3]

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Minor axis (μm) A | 7.0 | 6.0 | 9.0 | 5.0 | 5.0 | 5.5 | 5.0 |
| Major axis / minor axis B | 4.0 | 4.0 | 4.0 | 2.0 | 4.0 | 6.0 | 4.0 |
| Coefficient of variation for minor axes (%) C | 5.7 | 6.7 | 7.0 | 6.0 | 6.6 | 27.3 | 30.0 |
| Coefficient of variation for irregular shape ratios (%) | 12.5 | 17.5 | 15.0 | 20.0 | 20.0 | 20.0 | 22.5 |
| Coefficient of variation for cross-sectional areas (%) | 15.5 | 18.0 | 19.0 | 24.5 | 16.0 | 17.0 | 18.0 |
| $C^2/(A \times A \times B)^{1/2}$ | 2.3 | 3.7 | 2.7 | 5.1 | 4.4 | 55.3 | 90.0 |
| Continuous-production efficiency | A | A | A | A | A | C | C |
| Mass-production suitability | C | C | A | C | C | C | A |
| Warpage of glass-fiber-reinforced resin molded product | A | A | A | B | A | A | A |
| Bending strength of glass-fiber-reinforced resin molded product | B | A | C | A | A | A | A |

EP 4 491 592 B1

As can be seen from Tables 1 and 2, the flat-cross-section glass fibers of Examples 1 to 12, in each of which the coefficient of variation for the lengths of minor axes, C, was within the range of 8.0 to 26.1%, were superior or particularly superior in continuous-production efficiency and mass-production suitability, and successfully achieved superior or particularly superior reinforcing ability for resin molded products in combination.

On the other hand, as can be seen from Table 3, the flat-cross-section glass fibers of Comparative Examples 1 to 5, in each of which the coefficient of variation for the lengths of minor axes, C, was less than 8.0%, did not have superior mass-production suitability or failed to achieve superior reinforcing ability for resin molded products, and the flat-cross-section glass fibers of Comparative Examples 6 and 7, in each of which the coefficient of variation for the lengths of minor axes, C, was more than 26.1%, did not have superior continuous-production efficiency or mass-production suitability.

**Claims**

1. Flat-cross-section glass fiber comprising a plurality of flat-cross-section glass filaments each having a flat cross-sectional shape having a major axis with a length in a specific range and a minor axis with a length in a specific range, wherein

   a coefficient of variation for the lengths of the minor axes is within a range of 8.0 to 26.1%.

2. The flat-cross-section glass fiber according to claim 1, wherein the coefficient of variation for the minor axes is within a range of 12.6 to 18.5%.

3. The flat-cross-section glass fiber according to claim 1, wherein the length of each of the minor axes, A, is within a range of 3.5 to 10.5 $\mu$m, a ratio of the length of each of the major axes to the length of the corresponding minor axis (length of major axis / length of minor axis), B, is within a range of 1.5 to 9.0, and

   the A and B, and the coefficient of variation for the lengths of the minor axes, C, satisfy following expression (1):

$$11.7 \leq C^2 / (A \times A \times B)^{1/2} \leq 33.4 \cdots (1).$$

4. The flat-cross-section glass fiber according to claim 3, wherein the A, B, and C satisfy following expression (2):

$$14.0 \leq C^2 / (A \times A \times B)^{1/2} \leq 26.3 \cdots (2).$$

5. A method for manufacturing flat-cross-section glass fiber from a glass raw material containing a recycled glass material, comprising:

   with use of the glass raw material containing the recycled glass material in a range of 1.0 to 50.0% by mass to a total amount,
   obtaining a plurality of flat-cross-section glass filaments each having a flat cross-sectional shape having a major axis with a length in a specific range and a minor axis with a length in a specific range, wherein a coefficient of variation for the lengths of the minor axes is within a range of 8.0 to 26.1%; and
   bundling the plurality of flat-cross-section glass filaments together.

**Patentansprüche**

1. Einen flachen Querschnitt aufweisende Glasfaser, die eine Vielzahl von einen flachen Querschnitt aufweisenden Glasfilamenten umfasst, die jeweils eine flache Querschnittsform, welche eine Hauptachse mit einer Länge in einem spezifischen Bereich und eine Nebenachse mit einer Länge in einem spezifischen Bereich aufweist, besitzen, wobei ein Variationskoeffizient für die Längen der Nebenachsen in einem Bereich von 8,0 bis 26,1 % liegt.

2. Einen flachen Querschnitt aufweisende Glasfaser gemäß Anspruch 1, wobei der Variationskoeffizient für die Nebenachsen in einem Bereich von 12,6 bis 18,5 % liegt.

3. Einen flachen Querschnitt aufweisende Glasfaser gemäß Anspruch 1, wobei die Länge jeder der Nebenachsen, A, in einem Bereich von 3,5 bis 10,5 $\mu$m liegt, das Verhältnis der Länge jeder der Hauptachsen zu der Länge der entsprechenden Nebenachse (Länge der Hauptachse / Länge der Nebenachse), B, in einem Bereich von 1,5 bis 9,0 liegt und

A und B sowie der Variationskoeffizient für die Längen der Nebenachsen, C, den folgenden Ausdruck (1) erfüllen:

$$11.7 \leq C^2 / (A \times A \times B)^{1/2} \leq 33.4 \qquad (1).$$

4. Einen flachen Querschnitt aufweisende Glasfaser gemäß Anspruch 3, wobei A, B und C den folgenden Ausdruck (2) erfüllen:

$$14.0 \leq C^2 / (A \times A \times B)^{1/2} \leq 26.3 \qquad (2).$$

5. Verfahren zur Herstellung von einen flachen Querschnitt aufweisenden Glasfasern aus einem Glasrohmaterial, das ein recyceltes Glasmaterial enthält, wobei das Verfahren Folgendes umfasst:

unter Verwendung des Glasrohmaterials, das das recycelte Glasmaterial in einem Bereich von 1,0 bis 50,0 Massen-%, bezogen auf die Gesamtmenge, enthält,
Erhalten einer Vielzahl von einen flachen Querschnitt aufweisenden Glasfilamenten, die jeweils eine flache Querschnittsform, die eine Hauptachse mit einer Länge in einem spezifischen Bereich und eine Nebenachse mit einer Länge in einem spezifischen Bereich aufweist, besitzen, wobei der Variationskoeffizient für die Längen der Nebenachsen in einem Bereich von 8,0 bis 26,1 % liegt, und
Bündeln der Vielzahl der einen flachen Querschnitt aufweisenden Glasfilamente miteinander.

**Revendications**

1. Fibre de verre à section transversale plate comprenant une pluralité de filaments de verre à section transversale plate, chacun ayant une forme de section transversale plate ayant un axe majeur d'une longueur dans une plage spécifique et un axe mineur d'une longueur dans une plage spécifique, dans lequel
un coefficient de variation pour les longueurs des axes mineurs est compris dans une plage de 8,0 à 26,1 %.

2. Fibre de verre à section transversale plate selon la revendication 1, dans laquelle le coefficient de variation pour les axes mineurs est compris dans une plage de 12,6 à 18,5 %.

3. Fibre de verre à section transversale plane selon la revendication 1, dans laquelle la longueur de chaque axe mineur, A, est comprise entre 3,5 et 10,5 μm, le rapport de la longueur de chaque axe majeur à la longueur de l'axe mineur correspondant (longueur de l'axe majeur / longueur de l'axe mineur), B, est compris entre 1,5 et 9,0, et
les A et B, ainsi que le coefficient de variation pour les longueurs des axes mineurs, C, satisfont l'expression suivante (1) :

$$11,7 \leq C^2 / (A \times A \times B)^{1/2} \leq 33,4 \qquad (1).$$

4. Fibre de verre à section transversale plate selon la revendication 3, dans laquelle A, B et C satisfont l'expression (2) suivante :

$$14,0 \leq C^2 / (A \times A \times B)^{1/2} \leq 26,3 \qquad (2).$$

5. Procédé de fabrication de la fibre de verre à section transversale plate à partir d'une matière première de verre contenant un matériau de verre recyclé, comprenant :

avec l'utilisation de la matière première en verre contenant du matériau de verre recyclé dans une plage de 1,0 à 50,0 % en masse par rapport à la quantité totale,
obtenir une pluralité de filaments de verre à section transversale plate, chacun ayant une forme de section transversale plate présentant un axe majeur d'une longueur comprise dans une plage spécifique et un axe mineur d'une longueur comprise dans une plage spécifique, le coefficient de variation pour les longueurs des axes mineurs étant compris dans une plage de 8,0 à 26,1 % ; et
regrouper la pluralité de filaments de verre à section transversale plate.

**EP 4 491 592 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7063424 B

- JP 2021001111 A